# EUROPÄISCHE PATENTANMELDUNG

(11) **EP 0 997 371 A2**
(43) Veröffentlichungstag der Anmeldung: **03.05.2000**
(21) Anmeldenummer: 99250386.2
(22) Anmeldetag: 01.11.1999
(51) Int. Cl.: B62D 53/00

(54) **Fahrzeug zum Transport von schweren Gütern**

(30) Priorität: 30.10.1998 DE 19851704
(71) Anmelder: Greenport System Holding GmbH, 13507 Berlin (DE)
(72) Erfinder: Schröter, Johannes, 13595 Berlin (DE)
(74) Vertreter: Pfenning, Meinig & Partner

(57) **Zusammenfassung**

Es wird ein Fahrzeug (1) zum Gütertransport vorgeschlagen, welches einen Triebwagen (2) sowie einen Lastanhänger (3) zur Aufnahme von Frachtgut (4) aufweist, wobei der Lastanhänger (3) in Querrichtung zum Lastanhänger (3) zusammenfügbare mitlaufende Lastträger (9) aufweist, zwischen denen ein Abstand besteht. An den Innenseiten von sich gegenüberstehenden Lastträgern (9) sind in Längsrichtung mehrere Abstütz- und/oder Eingreifelemente (26a) zur Aufnahme des Frachtgutes angebracht. Unterhalb der Eingreifelemente (26a) sind mehrere Zuganker (8) mit den Innenseiten der Lastträger (9) lösbar verbunden.

## Beschreibung

Die vorliegende Erfindung betrifft ein Fahrzeug zum Transport von schweren Gütern nach dem Oberbegriff des Hauptanspruches.

Es sind Fahrzeugsysteme zum Gütertransport bekannt, welche einen Triebwagen sowie einen Lastanhänger zur Aufnahme von Frachtgut aufweisen, wobei der Lastanhänger in Querrichtung zum Lastanhänger zusammenfügbare mitlaufende Lastträger enthält. Die Lastträger sind im Allgemeinen in der Draufsicht rechteckförmig und weisen mehrere lenkbare Achsen auf, welche gemeinsam eine Tragfläche zur Aufnahme von Frachtgut stützen. Aus der EP 0 864 485 A2 ist ein solches Transportfahrzeug bekannt, das eine Anzahl von hintereinander gekoppelten Modulen umfaßt, wobei die Breite der Module der eines halben ISO Containers entspricht. Die Module oder Lastträger können auch nebeneinander angeordnet und zwischen ihnen ein Verbindungselement vorgesehen werden, das aus einem dreiseitigen Rahmen besteht, dessen Seitenflächen an den Innenseitenflächen der Module anliegen und mit diesen verbunden sind. Innerhalb des Rahmens sind schräge Abstützflächen vorgesehen, auf denen die Last, ein Rohrkörper, ruht. Bei diesem bekannten Transportfahrzeug liegt die Lagerfläche tiefer als die Lastplattform der Module, wodurch Stabilität gewonnen wird und z. B. auch Brücken mit begrenzter Höhe unterfahren werden können.

Dieses bekannte Transportfahrzeug benötigt zum Beladen mit dem schweren Gut einen Kran, der das Gut auf das Fahrzeug hebt.

Der Erfindung liegt die Aufgabe zugrunde, ein Fahrzeug zum Transport von schweren Gütern auf dem herkömmlichen Straßennetz zu schaffen, das zum Be- und Entladen keine Kräne oder dgl. benötigt.

Diese Aufgabe wird durch ein Fahrzeug mit den Merkmalen des Oberbegriffs des Hauptanspruchs in Verbindung mit seinen kennzeichnenden Merkmalen gelöst.

Dadurch, daß bei zwei mit Abstand zueinander angeordneten Lastträgern an deren zugewandten Seiten Abstütz- und/oder Eingreifelemente vorgesehen sind und unterhalb dieser Zuganker zwischen den Lastträgern angeordnet sind, die lösbar an den Innenwänden der Lastträger befestigt sind, ist es möglich, das Transportgut mit dem Fahrzeug bzw. den Lastträgern zu "umschließen", d.h. dieses außenherum zusammenzubauen, wobei die Abstütz- und/oder Eingreifelemente in Kontakt mit dem Transportgut z.B. einer Maschine oder einem Transformator kommt. Anschließend kann das Gut durch eine Lastträger eigene Hubvorrichtung angehoben werden. Dabei ist entscheidend, daß die Last auf die Innenseite des Fahrwerks eingeleitet wird und mit den Zugankern dafür gesorgt wird, daß das Fahrzeug nicht nach innen kippt, sondern beim hydraulischen Hubvorgang entsprechen senkrecht stabil bleibt. Auf diese Weise können Lasten unmittelbar vom Boden oder auf Kanthölzern stehend ohne Kran oder sonstigen externes Hubzeug aufgenommen werden. Wichtig ist, daß unter dem Transportgut ein kleiner Raum zum Anbringen der Zuganker bleibt.

Das so entstehende Modulsystem erlaubt auf eine kostengünstige Weise den Transport extrem sperriger Frachtgüter, da praktisch beliebige Kombinationen von mitlaufenden Lastträgern und Abstandshaltern "um das Frachtgut herum" möglich sind. Durch das verringerte Leergewicht eines erfindungsgemäßen Fahrzeugsystems kann die Anzahl der Achsen verringert werden, dies senkt die Investitionskosten und ermöglicht außerdem einen schonenderen Umgang mit dem öffentlichen Straßennetz.

Vorteilhafte Weiterbildung der vorliegenden Erfindung werden in den abhängigen Ansprüchen angegeben.

Eine vorteilhafte Ausführungsform sieht vor, daß die mitlaufenden Lastträger Rollen bzw. auf Achsen befindliche Räder aufweisen, wobei die Räder oder Rollen mit Hub- und Lenkvorrichtungen verbunden sind, welche ein Heben, Senken sowie Lenken jedes Rades bzw. jeder Achse ermöglicht. Hierbei kann auch für einen Lastträger bzw. für mehrere Lastträger ein zentrales Lenkjoch vorgesehen sein, welches zentral das Anlenken und Anheben einer Vielzahl von Rädern/Rollen bzw. des gesamten Rollkörpers ermöglicht. Da besonders bei größeren Modulen zum Lenken des Anhängers unterschiedliche Lenkeinschläge einzelner Räder notwendig sind, muß die Hub- und Lenkvorrichtung außerdem über eine Abstimmeinrichtung zwischen einzelnen Rädern verfügen. Die Abstimmung kann hydraulisch, mechanisch oder auch elektronisch sein.

Die Eingreifelemente sind vorteilhafterweise an den Innenseiten der Lastträger herausragende Dorne oder Ansätze sowie an dem Frachtgut herausragende Stützen bzw. Ausnehmungen, wobei die Stützen oberhalb der Dorne, sich auf diese abstützend, angeordnet sind. Die Dorne können z.B. an Winkelstücken befestigt sein, welche über die Lastträger gelegt werden. Dies ist besonders vorteilhaft, wenn der Dorn unterhalb der Tragfläche des mitlaufenden Lastträgers angebracht werden soll. Es ist jedoch auch möglich, Aufbauten zu schaffen, welche deutlich oberhalb der Tragfläche der Lastträger befestigte Dorne aufweisen, um z.B. Frachtgut mit hochliegenden Stützen auf den Lastträgern abstützen zu können. Die erfindungsgemäßen Zuganker sorgen dafür, daß Kräften bzw. Momenten, welche ein Verdrehen bzw. Auseinanderfallen des Lastanhängers bewirken könnten, entgegengewirkt wird, um die Stabilität der Gesamtanordnung zu erhalten. Sowohl Dorne als auch Zuganker sind in Längsrichtung des Lastanhängers beliebig verschiebbar.

Weitere vorteilhafte Ausführungsformen werden in den übrigen Ansprüchen angegeben. Ausführungsbeispiele der Erfindung werden anhand der nachfolgenden Zeichnung naher erläutert, wobei die Offenbarung der EP 0 864 485 mit zur Offenbarung der Erfindung hier eingeschlossen wird. Es zeigen:
- Fig. 1a: eine Seitenansicht eines erfindungsgemäßen Lastanhängers,
- Fig. 1b: eine Draufsicht des Lastanhängers aus Fig. 1a,
- Fig. 2a: eine Draufsicht einer weiteren Ausführungsform eines erfindungsgemäßen Lastanhängers,
- Fig. 2b: der Lastanhänger aus Fig. 2a gemäß Schnitt B-B.
- Fig. 3: eine vergrößerte Teilansicht eines erfindungsgemäßen Lastträgers.

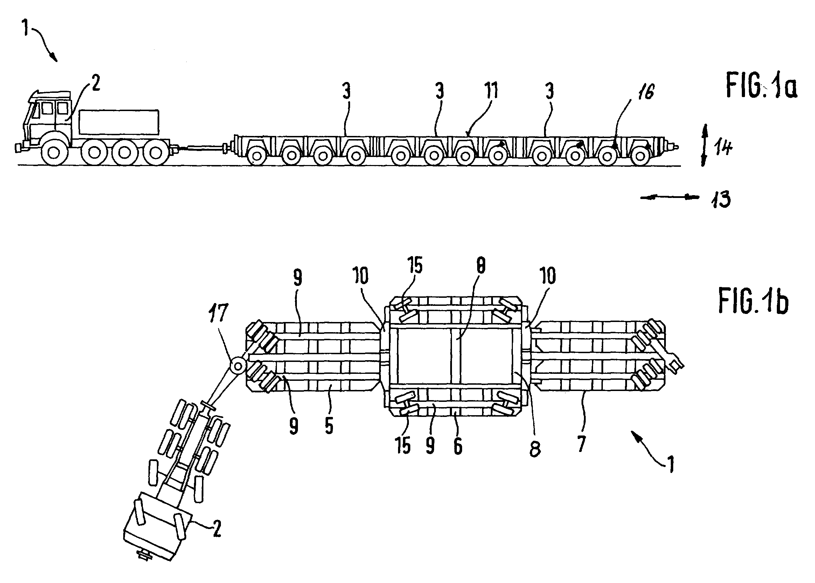

Fign. 1a und 13b zeigen ein erfindungsgemäßes Fahrzeug 1. Dieses weist einen Triebwagen 2 sowie einen damit über eine am Triebwagen 2 gelenkig gelagerte Stange verbundenen Lastanhänger 3 auf. Der Lastanhänger 3 besteht aus drei Rollkörpern 5, 6 und 7, welche in Längsrichtung des Lastanhängers hintereinander angeordnet sind. Die einzelnen Rollkörper 5, 6 und 7 sind im Wesentlichen starr miteinander verbunden. Der erste und dritte Rollkörper 5,7 bestehen aus zwei in Längsrichtung orientierten, direkt nebeneinander liegenden Lastträgern 9. Die Lastträger 9 des Rollkörpers 6 sind voneinander in Querrichtung des Lastanhängers getrennt und weisen einen Abstand zueinander auf, der durch Kopfstücke 10 eingehalten wird. Lastträger 9 können durch Kopfstücke hydraulisch auseinander- und zusammengefahren werden. Zwischen den Lastträgern 9 sind außerdem Zuganker 8 angeordnet, die mit den senkrechten Innenwänden der Lastträger lösbar verbunden sind.

Die einzelnen Lastträger 9 weisen eine im Wesentlichen horizontal ebene Tragfläche 11 auf. Diese Tragfläche wird von in Längsrichtung 13 des Lastanhängers 3 orientierten Rollen 15 getragen. Die Rollen 15 sind jeweils paarweise zusammengefaßt, wobei zwei Rollenpaare über eine Starrachse miteinander verbunden sind und diese Achse in der Hochachse gegenüber der Tragfläche 11 verdrehbar (d.h. lenkbar) ist.

Die Kopplung der Kopfstücke 10 an den Stirnseiten der mitlaufenden Lastträger erfolgt in formschlüssiger Weise, etwa mittels Bolzenverbindungen.

Frachtgut 4, etwa ein Transformator, wird beispielsweise nur auf den Rollkörper 6 aufgelegt. Die Verbindungen zwischen den einzelnen Rollkörpern sind so gestaltet, daß sie in der Hochachse 14 Kraft aufnehmend sind. Mit dem Ankoppeln der Rollkörper 5 und 7 vor bzw. hinter den eigentlichen lasttragenden Rollkörper 6 wird erreicht, daß die Last auf die drei Rollkörper gleichmäßig verteilt wird. Dies ist nach gesetzgeberischen Vorschriften notwendig, um eine bestimmte Achslast (z.B. 12 Tonnen pro Achse) nicht zu überschreiten. Diese Einschränkung gilt jedoch nur für das öffentliche Straßenverkehrsnetz. Auf Privatgeländen ist es dagegen möglich, die Höchstlast der Achsen auszunutzen, welche deutlich höher liegt, z.B. bei über 30 Tonnen. In diesem Fall kann bei Eintreffen des Fahrzeugsystems auf dem Privatgelände einer Spedition der Rollkörper 6 von den Rollkörpern 5 und 7 gelöst und einzeln rangiert werden. Dies geschieht mittels eines Lenkjoches, welches an einen stirnseitigen Kopfstück 10 des Rollkörpers 6 angeflanscht wird. Dieses Lenkjoch kann dann mit einem Triebwagen 2 verbunden und später rangiert werden. Dieses Abkoppeln des Rollkörpers 6 von den übrigen Rollkörpern erlaubt einen deutlich verringerten Raumbedarf des Speditionsgeländes bzw. von Hallen zur Unterbringung des Frachtgutes 4, welches auf dem Rollkörper 6 aufliegt.

Jeder Lastträger 9 weist in Längsrichtung 13 des Lastanhängers 3 vier der oben beschriebenen Achsen hintereinander auf. Sämtliche dieser Achsen sind um die Hochachse 14 drehbar und hydraulisch in der Hochachse verfahrbar. Die Drehbarkeit der lenkbaren Achsen in der Hochachse kann durch eine herkömmliche Zahnradlenkung oder auch hydraulisch erfolgen, der Höhenausgleich kann entweder zentral für eine Achse (etwa mittels einer Hydraulik oder einer zentralen Federung, welcher mit einer Hülse zusammenwirkt) durchgeführt werden, es ist jedoch auch eine Einzelradaufhängung der einzelnen Rollen (z.B. mit Einarmschwingen) möglich.
Sämtliche Achsen eines Lastträgers 9 werden über eine Hub- und Lenkvorrichtung 16 (nur einige dargestellt) zum Heben und Senken sowie zum Lenken des Lastträgers zentral gesteuert. Die kinematische Kopplung der einzelnen Achsen kann hierbei über eine zentrale Hydraulik, die jede Achse hydraulisch ansteuert oder auch auf mechanischem Wege erfolgen. Es sind jedoch auch weitere Möglichkeiten der Kopplung gegeben, etwa auf elektronischem Wege (hierbei wird keine Kraft zu einer Achse geleitet, es werden lediglich elektronische Informationen zu einem Antrieb zum Lenken und Heben einer Achse geleitet. Die Lenkung sämtlicher Achsen, welche zu dem Lastanhänger 3 gehören, erfolgt über ein zentrales Lenkjoch 17. Dieses ist mit den Hub- und Lenkvorrichtungen 16 der einzelnen Lastträger 9 verbunden und gibt Lenksignale an jede einzelne Achse ab. Die Lenkinformation ist hierbei für jede Achse etwas unterschiedlich, da der Lenkeinschlag sämtlicher Achsen, je nach ihrer Stellung bezüglich des Kurvenradius, etwas anders ist.

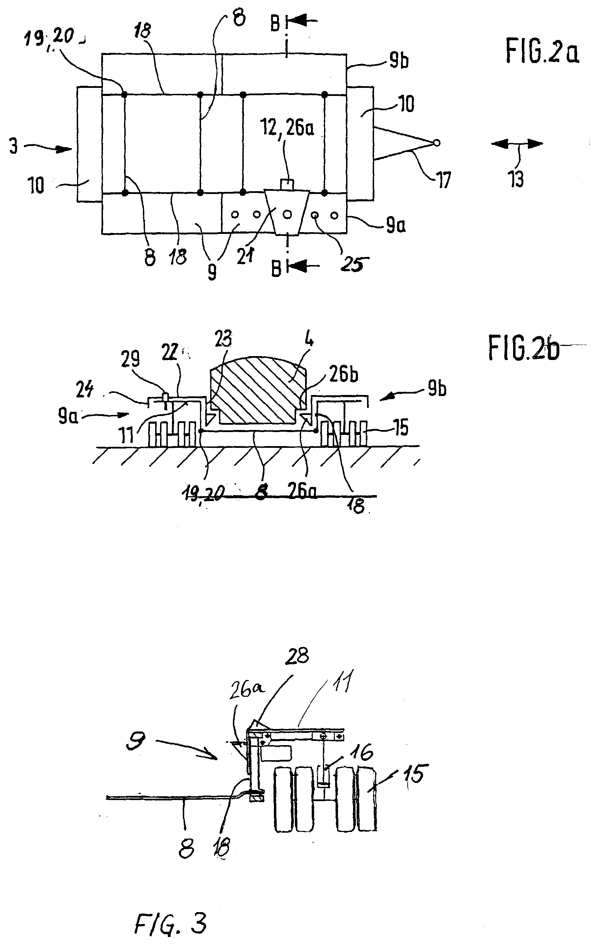

Fign. 2a und 2b zeigen eine weitere Ausführungsform eines erfindungsgemäßen Lastanhängers 3. Fig. 2a zeigt eine Draufsicht des unbeladenen Lastanhängers 3. Dieser enthält vier mitlaufende Lastträger 9. Jeweils zwei mitlaufende Lastträger 9 sind hintereinander angeordnet und starr zu einer Gruppe verbunden. Zwei dieser Gruppen sind parallel zueinander in einem Abstand angebracht. An den Stirnseiten der Gruppen mitlaufender Lastträger sind die Kopfstücke 10 angebracht, welche formschlüssig mit den Lastträgern 9 verbunden sind. Die Verbindung erfolgt mittels Bolzen bzw. Splintverbindungen nach dem Stand der Technik. So ist es z.B. möglich, daß die Kopfstücke 10 in Längsrichtung des Lastanhängers 3 orientierte Bolzen aufweisen, welche in korrespondierende Bohrungen der Stirnseiten der mitlaufenden Lastträger 9 eingreifen. Diese Steckverbindung wird sodann z.B. über Splinte gesichert, so daß ein leichtes Lösen der Verbindung stets möglich ist.

Fig. 2b zeigt einen Schnitt durch den Lastanhänger aus Fig. 2a gemäß B-B. Zur Verdeutlichung ist in Fig. 2b außerdem ein Frachtgut 4 eingezeichnet, das im Wesentlichen zwischen den Lastträgern 9 (bzw. zwischen Gruppen 9a, 9b der Lastträger) sich auf diesen abstützend, angeordnet ist. An dem Frachtgut 4 sowie den dem Frachtgut zugewandten Innenseiten 18 der mitlaufenden Lastträger 9 sind komplementäre Eingreifelemente 26a, 26b vorgesehen, die das Gewicht des Frachtgutes 4 aufnehmen. Zwischen den Lastträgern 9 sind mehrere in Längsrichtung 13 mit Abstand zueinander angeordnete Zuganker 8 vorgesehen, die an ihren Enden Befestigungselemente 19 für die Verbindung mit an den Innenwänden 18 der Lastträger 9 angebrachten Befestigungsvorrichtungen 20 aufweisen.

Über die Lastträger 9 bzw. über deren Tragfläche 11 können Winkelbleche bzw. Winkelstücke als Lasthalter 21 gelegt sein, wobei ein erster Abschnitt 22 der Winkelstücke auf der Tragfläche 11 des Lastträgers 9 aufgelegt ist und ein zweiter Abschnitt 23 an der zu dem Frachtgut 4 hin orientierten Seite des mitlaufenden Lastträgers 9 angebracht ist. Die Eingreifelemente 26a sind auf dem zweiten Abschnitt 23 befestigt und zu dem Frachtgut 4 hin orientiert und sind entweder mit diesem verschweißt oder geschraubt oder werden in diese eingehakt, so daß sie von oben eingeleitete Kräfte aufnehmen können. Die Eingreifelemente 26a haben im Querschnitt eine Dreiecksform, wobei die Oberseite als zum Erdboden parallele oder leicht gekrümmte Flachseite ausgeführt ist. Selbstverständlich können die Eingreifelemente 26a auch direkt an den Innenseiten 18 der Lastträger 9 befestigt sein. Selbstverständlich können die Eingreifelemente auch oberhalb der Tragfläche 11 angebracht werden.

Die Eingreifelemente 26a untergreifen das Frachtgut 4 bzw. seitlich herausragende Stützen oder Ausnehmungen 26b des Frachtgutes 4.. Zum punktuellen Abstützen sind neben den hier gezeigten Elementen zahlreiche weitere in der Hochachse Kraft aufnehmende Elemente denkbar, die an der Tragfläche 11 oder den Innenflächen 18 angeordnet sind, wobei die Kraft auf die Innenseite der Lastträger zu richten ist.

Die die Drehmomente kompensierenden Zuganker 8 können z.B. als Seile, Bänder oder Stangen ausgeführt sein. An den Enden von Gewinde aufweisenden Stangen können Muttern aufgeschraubt sein, welche über Haken verfügen. Die Lastträger 9 können an ihren Innenseiten 18 geschlossene Ösen aufweisen, welche nicht näher dargestellt sind. Zur Einhaltung eines bestimmten Abstandes ist es nun möglich, die Haken der Gewindestangen in die Ösen der sich gegenüberstehenden mitlaufenden Lastträger einzuführen, so daß ein Auseinanderziehen der Lastträger nicht mehr möglich ist. Durch Drehung der mit den Haken versehenen Muttern kann vor Einhaken der Gewindestange der einzuhaltende Maximalabstand reguliert werden.

Es ist jedoch auch möglich, die Zuganker 8 klammerartig auszuführen, so daß sie die mitlaufenden Lastträger klammerartig umgreifen. Hierzu ist es möglich, Gewindestangen oder Balken vorzusehen, welche an ihren Enden quer zur Längsrichtung abstehende Abschnitte aufweisen, welche jeweils ein Teil der sich gegenüberstehenden Lastträger umgreifen und somit den Höchstabstand der sich gegenüberstehenden Lastträger begrenzen.

Bei der in Fign. 2a und 2b gezeigten Ausführungsform eines Lastanhängers ist es sehr vorteilhaft, die Winkelstücke 21 zur Umgreifung der Tragfläche 11 klammerartig auszuführen. Hierzu schließt sich an den ersten Abschnitt 22 des Winkelstücks 21 ein Abschnitt 24 an, welcher die Tragfläche 11 hintergreift. Zur zusätzlichen Sicherung des Winkelbleches 21 auf der Tragfläche 11 ist es außerdem möglich, die Tragfläche 11 sowie das Winkelblech 21 mit Bohrungen 25 zu versehen, welche so übereinander schiebbar sind, daß die Bohrungen fluchten und ein Sicherungsbolzen 29 in die fluchtende Bohrung von Winkelblech und Tragfläche 11 eingesteckt werden kann. Dieser Bolzen kann zusätzlich durch Splinte gesichert werden.

In Fig. 3 ist ein Teil des Lastträgers 9 detaillierter dargestellt, wobei zusätzlich zu den Bauteilen der Fig.2b ein Abstützelement 27 am innenliegenden Rand der Tragfläche 11, das gleichfalls zur Lastaufnahme dient, und der Hubzylinder vorgesehen sind.

Zum Beladen eines Lastanhängers 3 nach Fign. 2a und 2b mit einem Frachtgut 4, das selbst in einem Gestell aufgenommen ist oder auf Kanthölzern oder dgl. direkt auf dem Boden abgestellt ist, werden seitlich die Lastträger in ihrer abgesenkten Stellung mit den darauf angebrachten Winkelstücken 21 bzw. Eingreifelementen 26a herangefahren, so daß die Eingreifelemente 26a die korrespondierenden Stützen 26b des Frachtgutes 4 untergreifen. Dabei können die Kopfstücke 10 den Abstand zwischen den Lastträgern regulieren. Dann werden die Zuganker unterhalb des Frachtgutes in Stellung gebracht und mit den Innenwänden 18 über die Befestigungsvorrichtungen 19,20 verbunden. Die den jeweiligen Lastträgern eigenen Hubvorrichtungen 16 werden hochgefahren, so daß das Frachtgut angehoben wird. Dabei nehmen die Zuganker 8 die auftretenden Zugkräfte auf, so daß das Fahrwerk nicht nach innen kippt und die Stabilität der Gesamtanordnung gewährleistet wird. Gegebenenfalls wird zusätzlich ein Lenkjoch 17 montiert. Abschließend werden ggf. die das Frachtgut 4 ursprünglich stützenden Lagerhölzer entfernt und der Lastanhänger 3 kann mittels eines Triebwagens 2 an dem Lenkjoch 17 fortbewegt werden.

## Patentansprüche

1. Fahrzeug zum Transport von schweren Gütern, insbesondere auf Straßen mit einem Triebanhänger und einem Lastanhänger, wobei der Lastanhänger aus mehreren nebeneinander und/oder hintereinander angeordneten Lastträgern mit Rädern gegebenenfalls mit Abstand zueinander zusammengesetzt ist und wobei jedem Lastträger eine Hubvorrichtung zugeordnet ist,
**dadurch gekennzeichnet,**
daß bei einer Anordnung von mindestens zwei Lastträgern mit Abstand zueinander die Lastträger an der jeweiligen einander zugewandten Seite Abstütz- und/oder Eingreifelemente zum Abstützen des zu transportierenden Gutes aufweisen und daß an den einander zugewandten Innenseiten der Lastträger im bodennahen Bereich derselben Befestigungsvorrichtungen vorgesehen sind, an denen lösbar den Abstand übergreifende Zuganker befestigbar sind.

2. Fahrzeug zum Transport von schweren Gütern nach Anspruch 1, dadurch gekennzeichnet, daß jeder Lastträger eine mit den Rädern verbundene Lenkvorrichtung zum Lenken des Lastträgers aufweist.

3. Fahrzeug zum Transport von schweren Gütern nach Anspruch 2, dadurch gekennzeichnet, daß die zu einem Lastanhänger gehörenden Lastträger ein zentrales Lenkjoch zum Lenken des Lastanhängers aufweisen.

4. Fahrzeug zum Transport von schweren Gütern nach einem der Ansprüche 1 bis 3, dadurch gekennzeichnet, daß die Zuganker als Seile, Bänder, Stangen oder dergleichen ausgebildet sind, an denen Befestigungselemente für die lösbare Verbindung mit den Befestigungsvorrichtungen an den Lastträgern vorgesehen sind.

5. Fahrzeug zum Transport von schweren Gütern nach einem der Ansprüche 1 bis 4, dadurch gekennzeichnet, daß die Abstütz- und/oder Eingreifelemente an Lasthaltern angeordnet sind, die an den Lastträgern befestigbar sind.

6. Fahrzeug zum Transport von schweren Gütern nach einem der Ansprüche 1 bis 5, dadurch gekennzeichnet, daß mindestens ein Kopfstück an zwei nebeneinander angeordneten Lastträgern vorgesehen ist, die diese miteinander verbindet und in einem festen Abstand zueinander hält.

7. Fahrzeug zum Transport von schweren Gütern nach Anspruch 6, dadurch gekennzeichnet, daß das Kopfstück hydraulisch auseinander- und zusammenschiebbar ist.

8. Fahrzeug zum Transport von schweren Gütern nach einem der Ansprüche 1 bis 7, dadurch gekennzeichnet, daß die Zuganker teleskopartig in ihrer Länge variabel feststellbar sind.

9. Verfahren zum Beladen eines Fahrzeugs mit einem Schwergut, das auf am Boden mit Abstand zum Boden vorgesehenen Auflageflächen angeordnet ist nach einem der Ansprüche 1 bis 5, dadurch gekennzeichnet, daß Lastträger seitlich neben das Schwergut gefahren und derart positioniert werden, daß die Abstütz- und/oder Eingreifelemente mit dem Schwergut in Kontakt treten, daß Zuganker jeweils an gegenüberliegenden Stellen mit den an den Lastträgern vorgesehenen Befestigungsvorrichtungen verbunden werden und daß die den Lastträgern zugeordneten Hubvorrichtungen diese zusammen mit dem Schwergut anheben, derart, daß es von den Auflageflächen weggefahren werden kann.
